# EUROPEAN PATENT SPECIFICATION

(11) **EP 4 540 113 B1**
(45) Date of publication and mention of the grant of the patent: **04.02.2026**
(21) Application number: 23729496.2
(22) Date of filing: 15.05.2023
(51) Int. Cl.: B60T 17/22, B60T 8/32, F16D 65/00

(54) **MOTOR-VEHICLE EQUIPPED WITH A CONTROL SYSTEM FOR THE NOISE GENERATED BY THE BRAKES, AND RELATED CONTROL METHOD**
KRAFTFAHRZEUG MIT EINEM STEUERSYSTEM FÜR DEN VON DEN BREMSEN ERZEUGTEN LÄRM UND ZUGEHÖRIGES STEUERVERFAHREN
VÉHICULE À MOTEUR DOTÉ DE SYSTÈME DE RÉGULATION DU BRUIT PRODUIT PAR LES FREINS, ET PROCÉDÉ DE RÉGULATION ASSOCIÉ

(30) Priority: 17.06.2022 IT 202200012860
(43) Date of publication of application: 23.04.2025
(73) Proprietor: C.R.F. Società Consortile per Azioni, 10043 Orbassano (Torino) (IT)
(72) Inventor: GRILLO, Massimo, 10043 Orbassano (Torino) (IT); GABIATI, Giovanni Luigi, 10043 Orbassano (Torino) (IT); IELUZZI, Michele, 10043 Orbassano (Torino) (IT); BADINO, Renato, 10135 Torino (IT)
(74) Representative: Buzzi, Notaro & Antonielli d'Oulx S.p.A.
(86) International application number: PCT/IB2023/054966
(87) International publication number: WO 2023/242646

(56) References cited:
- EP-A1- 2 927 530
- EP-A1- 3 640 492
- CN-A- 104 986 135
- DE-A1- 102015 009 443
- DE-A1- 102018 200 503
- DE-A1- 102018 211 985
- DE-A1- 102019 101 390
- US-A1- 2006 202 555
- US-A1- 2010 250 081
- US-A1- 2019 193 698

## Description

### Field of the invention

This invention relates to motor-vehicles of the type comprising:
- a plurality of disc brakes associated with the wheels of the motor-vehicle,
- each disc brake including a disc connected in rotation with the respective wheel, and a brake caliper provided with brake pads cooperating with the disc,
- a braking system to control the operation of said disc brakes following the intervention of the driver on a brake pedal or following the intervention of an automatic braking system with which the motor-vehicle provided, and
- an electronic controller of said braking system,
- wherein with each disc brake there is associated at least one sensor suitable for sending a signal indicative of the noise generated by the disc brake to said electronic controller.

### Prior art

Motor-vehicles of the type indicated above are known for example from US 7,021,727 B2, US 2004/0183366 A1, US 2010/0066164 A1, and also from EP 3 640 492 A1.

### Object of the invention

The object of this invention is to provide a system for controlling the noise generated by the disc brakes of a motor-vehicle which is capable of distinguishing between noises of different nature and implementing specific interventions for each type of noise detected.

A further object of the invention is to provide a noise control system which is capable of automatically removing, in whole or in part, the cause of the origin of the noise.

A further object of the invention is to achieve said objectives in a simple way, without constructive complications and without any appreciable increase in the production costs of the motor-vehicle.

### Summary of the invention

In view of achieving one or more of said objects, the invention relates to a motor-vehicle having the features which have been indicated at the beginning of the present disclosure and further characterized in that said electronic controller is configured to process the output signals by the sensors associated with the disc brakes of the motor-vehicle in order to distinguish between:
- a multi-frequency noise in a frequency range of 200-1500 Hz, this noise being indicative of an oxidized brake disc,
- a noise in a frequency range of 1500-14000 Hz, this noise being indicative of a whistle generated by an incorrect interaction between the brake pad and the respective brake disc, and
- a periodic noise having a period which is variable as a function of the speed of the vehicle, this noise being indicative of a deformed brake disc,
said electronic controller being also configured to implement the following corrective functions:
- controlling the braking system, when during braking a noise due to an oxidized brake disc is detected, in such a way as to superimpose a pressure modulation to the pressure with which the brake pads are pressed against the brake disc, the pressure modulation being such as to cause a partial or total removal of a layer of oxide from this brake disc, while simultaneously operating the other brakes of the vehicle in order not to alter their braking performance,
- controlling the braking system, when during braking a whistle generated by a disc brake is detected, in such a way as to superimpose a pressure modulation to the pressure with which the brake pads are pressed against the brake disc, the pressure modulation being such as to modify the interaction between the brake disc and the brake pads of the disc brake, while simultaneously operating the other brakes of the vehicle in order not to alter their braking performance,
- controlling said braking system when, during braking, a periodic noise is detected which is variable as a function of the speed of the vehicle, this noise being indicative of a deformed brake disc, in such a way as to modulate the braking pressure on this disc, so as to reduce an emergence of vibrations that may affect the motor-vehicle, while simultaneously operating the other brakes of the vehicle in order not to alter their braking performance.

According to a further feature, the electronic controller is configured to receive signals from a plurality of motor-vehicle sensors indicating one or more operating parameters of the motor-vehicle, selected, for example, from steering angle, vehicle speed, rotation speed of each wheel, vehicle yaw angle, operating condition of the transmission, and said electronic controller is characterized in that it is configured to define ranges of values of said operating parameters of the vehicle and/or combinations of said ranges of values which determine a safety priority condition, said electronic controller being also configured to disable said corrective functions when a safety priority condition is detected.

**In** the preferred embodiment, the electronic controller is configured for:
- calculating a parameter indicative of a noise level when during braking a noise due to an oxidized brake disc is detected,
- comparing the calculated value of this parameter with a predetermined threshold value, and
- activating said corrective function as long as the calculated value of this parameter is above said threshold value,
and for:
- calculating a parameter indicative of a whistle noise level when a disc brake whistle is detected during braking,
- comparing the calculated value of this parameter with a predetermined threshold value, and
- activating said corrective function as long as the calculated value of this parameter is above said threshold value,
and for:
- calculating a parameter indicative of a degree of deformation of the brake disc when a noise due to a deformed brake disc is detected during braking,
- comparing the calculated value of this parameter with a predetermined threshold value, and
- activating said corrective function as long as the calculated value of this parameter is above said threshold value.

In the case where the brake calipers are of the conventional hydraulically operated type, the electronic controller is configured to control the braking system so as to apply modulation to the pressure with which the pressurized fluid is supplied to the brake calipers.

The pressure modulation can consist in a "pressure dither", i.e. a pressure oscillation having predetermined frequency and amplitude, which is added to the normal pressure signal determined by the braking system.

The invention also relates to the method implemented through the system described above.

### Detailed description of the invention

Further features and advantages of the invention will emerge from the following description with reference to the attached drawings, provided purely by way of non-limiting example, in which:
- figure 1 is a scheme of a braking system of a motor-vehicle to which the control system of this invention is applied,
- figure 2 is a schematic sectional view of an embodiment of a disc brake,
- figures 3-5 are flow-charts illustrating different strategies implemented with the control method of this invention, and
- figure 6 shows a series of diagrams relating to the strategies implemented with the method according to the invention.

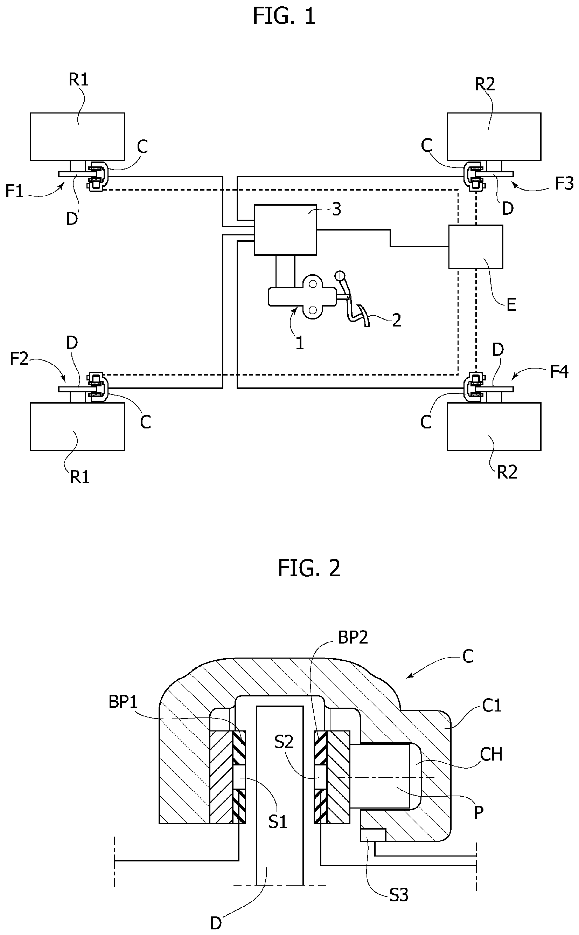

In figure 1, the references R1, R2 respectively indicate the two front wheels and the two rear wheels of a motor-vehicle, each of which is associated with a disc brake, respectively indicated with F1, F2, F3, F4. Each of the disc brakes F1-F4 can be made according to any known technique and comprises a disc D rigidly connected to the wheel hub, so as to rotate with the wheel, and a brake caliper C carried by the motor-vehicle structure (not shown) and suitable for engaging the disk D to slow down its rotation.

This invention is applicable to any type of disc brake. By way of a non-limiting example only, figure 2 shows a disc brake with a floating type caliper. However, it should be understood that the invention described herein is of general application and is not limited to any specific type of disc brake. With reference to figure 2, the disc D (of which only the peripheral portion is shown) cooperates with a caliper C including a body C1, on which a brake pad BP1 is rigidly connected, suitable for engaging one face of the disc D. The opposite face of the disc D is intended to be engaged by a second brake pad BP2 carried by a piston P of the fluid actuator of the brake caliper. The piston P is slidably mounted within a chamber CH defined by the body C1 of the brake caliper. The chamber CH is intended to be supplied with fluid under pressure in such a way as to push the piston P to the left (with reference to the drawing) in such a way as to press the pad BP2 against one face of the disc D. At the same time, the supply of pressurized fluid inside chamber CH also causes the entire body C1 of the brake caliper to move to the right (with reference to the drawing), so that the brake pad BP1 is pressed against the left face (with reference to the drawing) of the disc brake D.

Still according to the prior art, the motor-vehicle is equipped with a braking device 1 (figure 1) actuated by a brake pedal 2 and hydraulically connected to a pressure modulator unit 3 which controls the supply of the fluid under pressure to the fluid actuators of the brake calipers C, each fluid actuator being defined, in the example of figure 2, by the chamber CH and by the piston P sliding inside it.

Still according to the prior art, the braking system comprises an electronic controller E connected to the modulator 3 for controlling the operation of the braking system.

At least one of the brake pads BP1, BP2 of at least some of the disc brakes is associated with a sensor suitable for detecting a parameter indicative of a noise level generated by the disc brake. Figure 2, purely by way of example, shows the use of three sensors S1, S2, S3 associated with the body C1 of the caliper and with the two supports of the brake pads BP1, BP2, in the form of accelerometers or sensors of any other known type (for example piezoelectric sensors) suitable for detecting the vibrations of the body with which they are associated.

In figure 1, the dashed lines are the lines with which the output signals from the sensors associated with the disc brakes are sent to the electronic controller E, which in turn is connected to the modulator 3.

According to the invention, the electronic controller E is configured to process the output signals from the sensors S associated with the disc brakes of the motor-vehicle, in such a way as to distinguish between:
- a multi-frequency noise in a frequency range of 200-1500 Hz, this noise being indicative of an oxidized brake disc,
- a noise in a frequency range of 1500-14000 Hz, this noise being indicative of a whistle generated by an incorrect interaction between the brake pad and the respective brake disc, and
- a periodic noise having a period which is variable as a function of the speed of the vehicle, this noise being indicative of a deformed brake disc.

When, during braking, the electronic controller detects, through said sensors, a noise due to an oxidized brake disc, the same controller E controls the braking system in such a way as to superimpose a pressure modulation to the pressure with which the brake pads are pressed against the brake disc, such as to cause a partial or total removal of an oxide layer from the brake disc, while simultaneously operating the other brakes of the vehicle in order not to alter their braking performance.

**If** the disc brakes are of the conventional hydraulically actuated type, the electronic controller is configured to control the braking system in such a way as to apply said pressure modulation to the pressure with which the pressurized fluid is supplied to the brake calipers.

Similarly, when, during braking, the electronic controller detects, through said sensors, a whistle generated by a disc brake, the controller controls the braking system in such a way as to superimpose a pressure modulation to the pressure with which the brake pads are pressed against the brake disc, such as to modify the interaction between the brake disc and the brake pads of the disc brake, while simultaneously operating the other brakes of the vehicle in order not to alter their braking performance.

Furthermore, according to the invention, when during braking the electronic controller detects, through said sensors, a periodic noise which varies according to the speed of the vehicle, this noise being indicative of a deformed brake disc, the electronic controller controls the braking system in such a way to modulate the braking pressure on the brake disc, so as to reduce the occurrence of vibrations that may affect the motor-vehicle, while simultaneously operating the other brakes of the vehicle in order not to alter their braking performance.

Preferably, the electronic controller is configured to receive signals from a plurality of motor-vehicle sensors indicating one or more operating parameters of the motor-vehicle, selected, for example, from steering angle, vehicle speed, rotation speed of each wheel, vehicle yaw angle, operating conditions of the transmission and said electronic controller is configured to define ranges of values of such operating parameters of the vehicle and/or combinations of said ranges of values which determine a safety priority condition. The electronic controller is configured to disable the corrective functions described above when a safety priority condition is detected.

In the preferred embodiment, the electronic controller is configured for:
- calculating a parameter indicative of a noise level, when a noise due to an oxidized brake disc is detected during braking,
- comparing the calculated value of this parameter with a predetermined threshold value, and
- activating said corrective function as long as the calculated value of this parameter is above said threshold value,
and for:
- calculating a parameter indicative of a whistle noise level, when a disc brake whistle is detected during braking,
- comparing the value of this parameter with a predetermined threshold value, and
- activating said corrective function as long as the calculated value of this parameter is above said threshold value,
and for:
- calculating a parameter indicative of the degree of deformation of the disc, when a noise due to a deformed brake disc is detected during braking,
- comparing the calculated value of this parameter with a predetermined threshold value, and
- activating said corrective function as long as the calculated value of this parameter is above said threshold value.

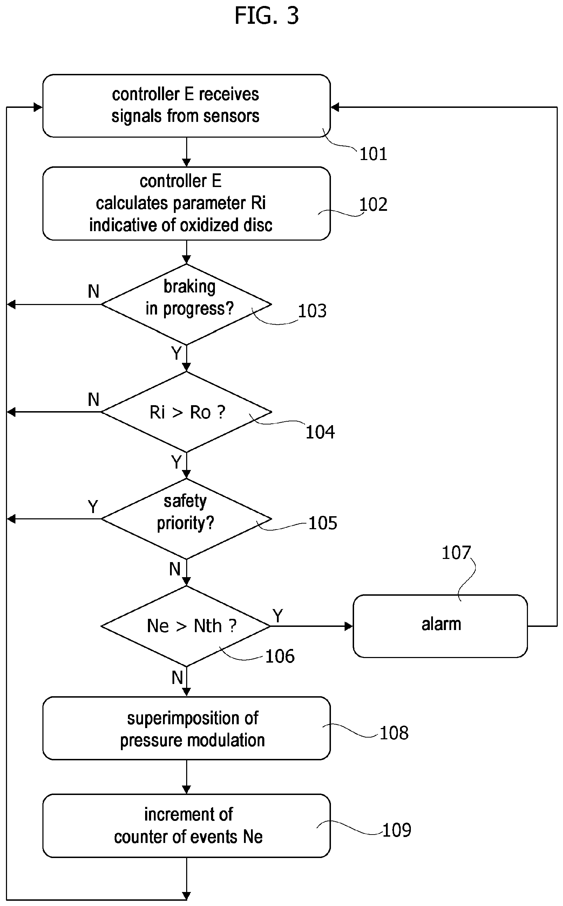

Figure 3 shows a flow-chart relating to an example of a strategy implemented in the system according to the invention to reduce or eliminate the noise due to oxidation of the brake disc. Block 101 refers to the operation with which the output signals from the sensors S are received by the electronic controller E. Block 102 indicates the operation with which the electronic controller E calculates a parameter Ri indicative of an oxidized brake disc. In block 103 the system checks whether braking is in progress. If no braking is in progress (output N of block 103) the operations start again from the beginning (therefore without carrying out any corrective function). If the answer in block 103 is affirmative (output Y) it proceeds to block 104, which indicates the operation by which the electronic controller E compares the calculated parameter Ri with a predetermined threshold value Ro. If the calculated parameter is not higher than the threshold value (output N) the operations restart from the beginning. If, on the other hand, the threshold value has been exceeded (output Y), it is checked in block 105 whether the motor-vehicle is in a condition in which priority must be given to safety. If the answer is affirmative (output Y) the operations start again from the beginning, as any corrective function on the brakes is disabled. In the event of a negative response (output N) in block 105, it continues towards the block 106, where it is verified that a number of cycles ("Ne") greater than a threshold value Nth have not already been performed. In the event of an affirmative response (output Y), an alarm is activated (for example, by turning on a warning light in the motor-vehicle control panel) and the operations start over from the beginning. If the response in block 106 is negative (output N) the system carries out the operation 108 consisting in superimposing a pressure modulation on the braking pressure. Block 109 relates to the increment of the counter of the performed cycles, after which it restarts from the beginning of the operations with a new cycle.

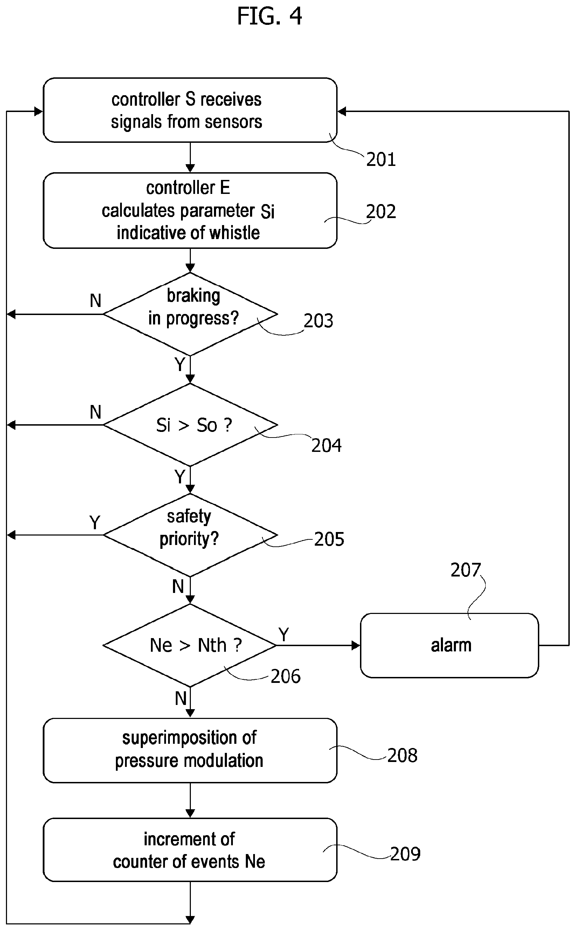

Figure 4 is completely analogous to figure 3 but relates to the strategy that is applied in case a disc brake whistle is detected. In figure 4, the blocks relating to the various operations are indicated with the same reference numbers of figure 3, increased by 100. In block 202 the electronic controller E calculates a parameter Si indicative of a whistle generated by a brake and in block 204 the controller compares the calculated parameter with a threshold value So of that parameter. For the rest, the operations are completely identical to those described with reference to figure 3.

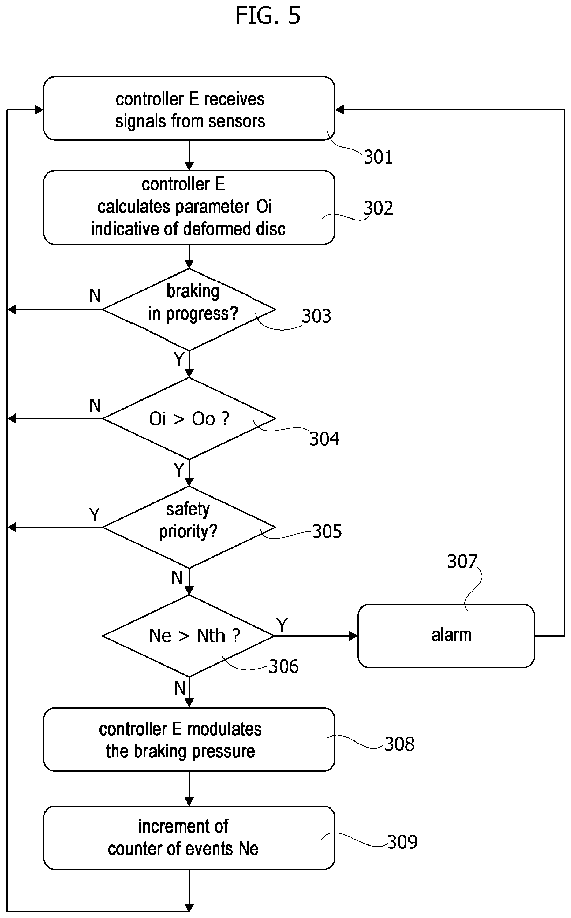

The same applies to the flow-chart of figure 5, where the blocks relating to the various operations have been indicated with the same reference numbers of figure 4, increased by 100. In this case, the electronic controller E processes the signals coming from the sensors to calculate, in block 302, a parameter Oi indicative of the degree of deformation of a brake disc, while in block 305 it compares the calculated parameter with a threshold value Oo of this parameter. In block 308, the electronic controller activates a modulation (in particular a reduction) of the braking pressure, i.e., in the case of a hydraulic system, of the pressure with which the pressurized fluid is supplied to the brake caliper.

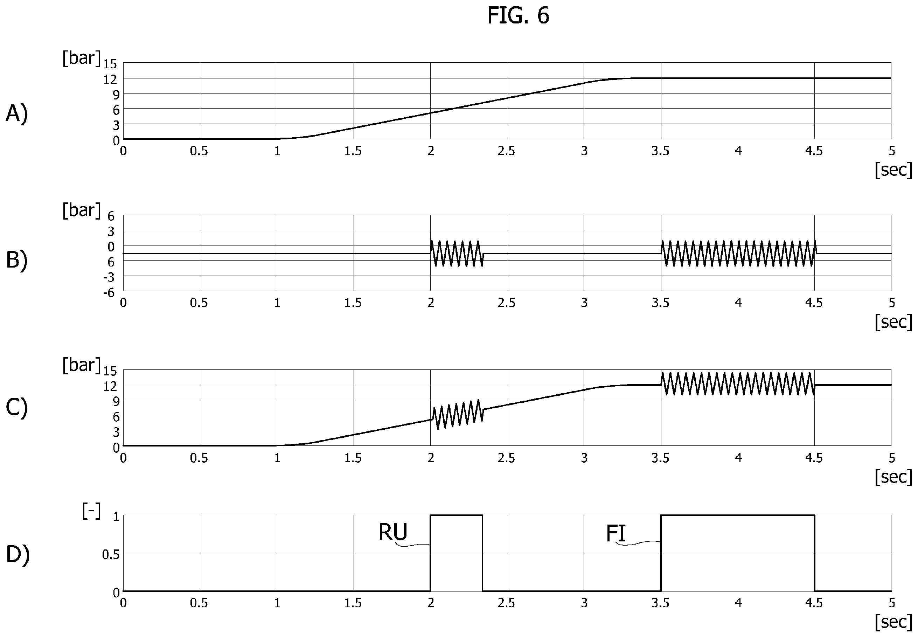

The diagram illustrated in figure 6(A) shows the variation over time of the actuating pressure of a brake caliper generated by a driver's intervention on the brake pedal.

According to the invention, in the case of intervention of the control system, a pressure dither is added to the pressure signal illustrated in the diagram of figure 6(A), for example, which is illustrated in the diagram of figure 6(B). As can be seen, where dither is applied, it consists in pressure oscillations above and below zero, with constant and predetermined amplitude and frequency. The diagram of figure 6(B) shows two different pressure dithers applied in correspondence with the detection of a signal RU (figure 6(D)) indicative of noise due to an oxidized brake disc, and in correspondence with a signal FI indicative of a whistle from a brake disc. The system activates the correction function discussed above for each type of noise as long as the presence of the noise is detected. The diagram in figure D shows how following the application of pressure dither, the noise is cancelled. The diagram of figure 6C shows the pressure applied to the brake calipers through the control system of the invention, result of the sum of the pressure signal of the diagram of figure 6(A) and of the pressure signal of the diagram of figure 6(B).

In a preferred embodiment, the pressure dither which is applied by the control system according to the invention has a constant frequency and an amplitude characteristic of the vehicle.

The teachings of this invention are also applicable to motor-vehicles in which drum brakes are provided, in which case at least one sensor of the noise or vibrations generated by the drum brake is associated with each drum brake. The electronic controller E is configured to process the output signal from the sensor associated with the drum brake and to distinguish between the noise generated by an oxidized drum and a whistle generated by an incorrect interaction between the drum and a respective brake shoe. The electronic controller E is also configured to control the braking system 1 in such a way as to superimpose a pressure modulation to the operating pressure of the brake shoe, in a completely analogous way to what has been described with reference to disc brakes.

Naturally, the principle of the invention remaining the same, the details of construction and the embodiments may vary widely with respect to what has been described and illustrated purely by way of example. The sensors associated with the brakes are able to detect both noise and vibration due to oxidation of the drum, and a whistle due to an incorrect interaction between the drum and the respective friction element.

## Claims

1. Motor-vehicle, comprising:
- a plurality of disc brakes (F1, F2, F3, F4) associated with the wheels (R1, R2) of the motor-vehicle,
- each disc brake including a disc (D) connected in rotation with the respective wheel, and a brake caliper (C) provided with brake pads (BP1, BP2) cooperating with the disc (D),
- a braking system (1) to control the operation of said disc brakes (F1-F4) following the intervention of the driver on the brake pedal (2) or following the intervention of an automatic braking system with which the motor-vehicle is provided, and
- an electronic controller (E) of said braking system (1),
- wherein with each disc brake (F1-F4) there is associated at least one sensor (S1, S2, S3), which is configured to send a signal indicative of the noise generated by the disc brake to said electronic controller (E),
said motor-vehicle being **characterized in that** said electronic controller (E) is configured to process the output signals from the sensors (S1, S2, S3) associated with the disc brakes (F1-F4) of the motor-vehicle, in such a way as to distinguish between:
- a multi-frequency noise in a frequency range of 200-1500 Hz, this noise being indicative of an oxidized brake disc,
- a noise in a frequency range of 1500-14000 Hz, this noise being indicative of a whistle generated by an incorrect interaction between a brake pad (BP1, BP2) and the respective brake disc (D), and
- a periodic noise having a period which is variable as a function of the speed of the vehicle, this noise being indicative of a deformed brake disc,
said electronic controller (E) being also configured to implement the following corrective functions:
- controlling said braking system (1), when during braking a noise due to an oxidized brake disc is detected, in such a way as to superimpose a pressure modulation to the pressure with which the brake pads (BP1, BP2) are pressed against the brake disc (D), said pressure modulation being such as to cause a partial or total removal of a layer of oxide from this brake disc (D), while simultaneously operating the other brakes of the vehicle in order not to alter their braking performance,
- controlling said braking system (1), when during braking a whistle generated by a disc brake (F1-F4) is detected, in such a way as to superimpose a pressure modulation to the pressure with which the brake pads (BP1, BP2) are pressed against the brake disc (D), said pressure modulation being such as to modify the interaction between the brake disc and the brake pads of the disc brake, while simultaneously operating the other brakes of the vehicle in order not to alter their braking performance,
- controlling said braking system when, during braking, a periodic noise is detected which is variable as a function of the speed of the vehicle, this noise being indicative of a deformed brake disc, in such a way as to modulate the braking pressure on this disc, so as to reduce an emergence of vibrations that may affect the motor-vehicle, while simultaneously operating the other brakes of the vehicle in order not to alter their braking performance.

2. Motor-vehicle according to claim 1, **characterized in that** said electronic controller (E) is configured to receive signals from a plurality of motor-vehicle sensors indicating one or more operating parameters of the motor-vehicle, selected, for example, from steering angle, vehicle speed, rotation speed of each wheel, vehicle yaw angle, operating conditions of the transmission, and **in that** said electronic controller (E) is configured to define the range of values of said operating parameters of the vehicle and/or combinations of said range of values which determine a safety priority condition,
said electronic controller (E) being also configured to disable said corrective functions when a safety priority condition is detected.

3. Motor-vehicle according to claim 1, **characterized in that** said electronic controller is configured for:
- calculating a parameter (Ri) indicative of a noise level when during braking a noise due to an oxidized brake disc is detected,
- comparing the calculated value of this parameter (Ri) with a predetermined threshold value (Ro), and
- activating said corrective function as long as the calculated value of this parameter (Ri) is above said threshold value (Ro),
and for:
- calculating a parameter (Si) indicative of a whistle noise level when a disc brake whistle is detected during braking (F1-F4),
- comparing the calculated value of this parameter (Si) with a predetermined threshold value (So), and
- activating said corrective function as long as the calculated value of this parameter (Si) is above said threshold value (So),
and for:
- calculating a parameter (Oi) indicative of a degree of deformation of the brake disc (D) when a noise due to a deformed brake disc is detected during braking,
- comparing the calculated value of this parameter (Oi) with a predetermined threshold value (Oo), and
- activating said corrective function as long as the calculated value of this parameter (Oi) is above said threshold value (Oo).

4. Motor-vehicle according to claim 1, wherein the brake calipers are hydraulically operated, **characterized in that** said electronic controller (E) is configured to control the braking system (1) in such a way as to apply said pressure modulation to the pressure with which pressurized fluid is supplied to the brake calipers (C) of the disc brakes (F1-F4).

5. Motor-vehicle according to claim 1, wherein the motor-vehicle comprises drum brakes, **characterized in that** at least one sensor of the noise generated by the drum brake is associated with each drum brake and said electronic controller (E) is configured to process the output signal from the sensor associated with the drum brake and to distinguish between the noise generated by an oxidized drum and a whistle generated by an incorrect interaction between the drum and a respective brake shoe, said electronic controller (E) being also configured for controlling said braking system (1) in such a way as to superimpose a pressure modulation on the operating pressure of said brake shoe.

6. Method for controlling a braking system of a motor-vehicle in order to reduce or eliminate the noise generated by disc brakes (F1, F2, F3, F4) associated with the wheels (R1, R2) of the motor-vehicle, while the motor-vehicle is running,
said method including the steps of:
- associating to each disc brake (F1-F4) at least one sensor (S1, S2, S3) configured to send a signal indicative of the noise generated by the disc brake to an electronic controller (E) of said braking system (1),
- processing, through said electronic controller (E), the output signals from the sensors associated with the disc brakes of the motor-vehicle, in such a way as to distinguish between:
- a multi-frequency noise in a frequency range of 200-1500 **Hz,** this noise being indicative of an oxidized brake disc,
- a noise in a frequency range of 1500-14000 **Hz,** this noise being indicative of a whistle generated by an incorrect interaction between a brake pad (BP1, BP2) and the respective brake disc (D), and
- a periodic noise having a period which is variable as a function of the speed of the vehicle, this noise being indicative of a deformed brake disc,
said method also including the following corrective functions:
- controlling said braking system (1), through said electronic controller (E), when during braking a noise due to an oxidized brake disc is detected, in such a way as to superimpose a pressure modulation to the pressure with which the brake pads are pressed against the brake disc, the pressure modulation being such as to cause a partial or total removal of an oxide layer from the brake disc, while simultaneously operating the other brakes of the vehicle in order not to alter their braking performance,
- controlling the braking system, through said electronic controller (E), when, during braking, a whistle generated by a disc brake is detected, in such a way as to superimpose a pressure modulation to the pressure with which the brake pads are pressed against the brake disc, the pressure modulation being such as to modify the interaction between the brake disc (D) and the brake pads (BP1, BP2) of the disc brake, while simultaneously operating the other brakes of the vehicle in order not to alter their braking performance,
- controlling the braking system (1), through said electronic controller (E), when during braking a periodic noise that varies with the speed of the vehicle is detected, the noise being indicative of a deformed brake disc, in such a way as to modulate the pressure braking on this disc, so as to reduce the occurrence of vibrations that may affect the motor-vehicle, while simultaneously operating the other brakes of the vehicle in order not to alter their braking performance.

7. Method according to claim 6, **characterized in that** it comprises receiving, in said electronic controller (E), from a plurality of sensors of the motor-vehicle, signals indicative of one or more operating parameters of the motor-vehicle, selected, for example, from steering angle, vehicle speed, rotation speed of each wheel, vehicle yaw angle, operating conditions of the transmission, and **in that** through the electronic controller (E) ranges of values of said operating parameters of the vehicle and/or combinations of said ranges of values are defined which determine a safety priority condition,
said method comprising the operation of disabling said corrective functions when a safety priority condition is detected.

8. Method according to claim 6, **characterized in that** it comprises:
- calculating, through said electronic controller (E), when during braking a noise due to an oxidized brake disc is detected, a parameter (Ri) indicative of a noise level,
- comparing, through said electronic controller (E), the calculated value of this parameter (Ri) with a predetermined threshold value (Ro), and
- activating, through said electronic controller (E), said corrective function as long as the calculated value of this parameter (Ri) is above said threshold value (Ro),
the method also comprising:
- calculating, through said electronic controller (E), when during braking a whistle is detected in a disc brake, a parameter (Si) indicative of the acoustic level of the whistle,
- comparing, through said electronic controller (E), the calculated value of this parameter (Si) with a predetermined threshold value (So), and
- activating, through said electronic controller (E), said corrective function as long as the calculated value of this parameter (Si) is above said threshold value (So),
and the method also comprising:
- calculating, when a noise due to a deformed brake disc is detected during braking, a parameter (Oi) indicative of the degree of deformation of the disc (D),
- comparing, through said electronic controller (E), the calculated value of this parameter (Oi) with a predetermined threshold value (Oo), and
- activating, through said electronic controller (E), said corrective function as long as the calculated value of this parameter (Oi) is above said threshold value (Oo).

9. Method according to claim 6, wherein the motor-vehicle comprises drum brakes, **characterized in that** at least one sensor of the noise generated by the drum brake is associated with each drum brake and said electronic controller (E) is configured to process output signals from the sensor associated with the drum brake and to distinguish between the noise generated by an oxidized drum and a whistle generated by an incorrect interaction between the drum and a respective brake shoe, said electronic controller (E) being also configured for controlling said braking system (1) in such a way as to superimpose a pressure modulation on the operating pressure of said brake shoe.

## Patentansprüche

1. Kraftfahrzeug, umfassend:
- eine Vielzahl von Scheibenbremsen (F1, F2, F3, F4), die mit den Rädern (R1, R2) des Kraftfahrzeugs assoziiert sind,
- jede Scheibenbremse eine Scheibe (D) einschließt, die in Drehung mit dem entsprechenden Rad verbunden ist, und einen Bremssattel (C), der mit Bremsbelägen (BP1, BP2) bereitgestellt ist, die mit der Scheibe (D) zusammenwirken,
- ein Bremssystem (1) zum Steuern des Betriebs der Scheibenbremsen (F1-F4) folgend der Intervention des Fahrers auf das Bremspedal (2) oder folgend der Intervention eines automatischen Bremssystems, mit dem das Kraftfahrzeug bereitgestellt ist, und
- eine elektronische Steuereinheit (E) des Bremssystems (1),
- wobei mit jeder Scheibenbremse (F1-F4) mindestens ein Sensor (S1, S2, S3) assoziiert ist, der konfiguriert ist, um ein Signal, das das von der Scheibenbremse erzeugten Lärm angibt, an die elektronische Steuereinheit (E) zu senden,
wobei das Kraftfahrzeug **dadurch gekennzeichnet ist, dass** die elektronische Steuereinheit (E) konfiguriert ist, um die Ausgabesignale von den Sensoren (S1, S2, S3), die mit den Scheibenbremsen (F1-F4) des Kraftfahrzeugs assoziiert sind, auf eine solche Weise zu verarbeiten, dass zwischen Folgendem unterschieden wird:
- einem Mehrfrequenzlärm in einem Frequenzbereich von 200-1500 Hz, wobei dieser Lärm eine oxidierte Bremsscheibe angibt,
- einem Lärm in einem Frequenzbereich von 1500-14000 Hz, wobei dieser Lärm ein Pfeifen angibt, das durch eine fehlerhafte Interaktion zwischen einem Bremsbelag (BP1, BP2) und der entsprechenden Bremsscheibe (D) erzeugt wird, und
- einem periodischen Lärm, das eine Periode aufweist, die als eine Funktion von der Geschwindigkeit des Fahrzeugs variabel ist, wobei dieser Lärm eine verformte Bremsscheibe angibt,
wobei die elektronische Steuereinheit (E) auch konfiguriert ist, um die folgenden korrigierenden Funktionen zu implementieren:
- Steuern des Bremssystems (1), wenn während eines Bremsens ein Lärm aufgrund einer oxidierten Bremsscheibe detektiert wird, auf eine solche Weise, dass dem Druck, mit dem die Bremsbeläge (BP1, BP2) gegen die Bremsscheibe (D) gedrückt werden, eine Druckmodulation überlagert wird,
wobei diese Druckmodulation derart ist, dass sie eine teilweise oder vollständige Entfernung einer Schicht von Oxiden von dieser Bremsscheibe (D) verursacht, während sie gleichzeitig die anderen Bremsen des Fahrzeugs betätigt, um deren Bremsleistungsfähigkeit nicht zu verändern,
- Steuern des Bremssystems (1), wenn während eines Bremsens ein von einer Scheibenbremse (F1-F4) erzeugtes Pfeifen detektiert wird, auf eine solche Weise, dass dem Druck, mit dem die Bremsbeläge (BP1, BP2) gegen die Bremsscheibe (D) gedrückt werden, eine Druckmodulation überlagert wird,
wobei diese Druckmodulation derart ist, dass sie die Interaktion zwischen der Bremsscheibe und den Bremsbelägen der Scheibenbremse modifiziert, während sie gleichzeitig die anderen Bremsen des Fahrzeugs betätigt, um deren Bremsleistungsfähigkeit nicht zu verändern,
- Steuern des Bremssystems, wenn während eines Bremsens ein periodischer Lärm detektiert wird, das als eine Funktion von der Geschwindigkeit des Fahrzeugs variabel ist, wobei dieser Lärm eine verformte Bremsscheibe angibt, auf eine solche Weise, dass der Bremsdruck auf diese Scheibe moduliert wird,
derart, dass Auftreten von Vibrationen reduziert wird, die das Kraftfahrzeug beeinträchtigen können, während gleichzeitig die anderen Bremsen des Fahrzeugs betätigt werden, um deren Bremsleistungsfähigkeit nicht zu verändern.

2. Kraftfahrzeug nach Anspruch 1, **dadurch gekennzeichnet, dass** die elektronische Steuereinheit (E) konfiguriert ist, um Signale von einer Vielzahl von Kraftfahrzeugsensoren zu empfangen, die einen oder mehrere Betriebsparameter des Kraftfahrzeugs angeben, die zum Beispiel aus einem Lenkwinkel, einer Fahrzeuggeschwindigkeit, einer Drehgeschwindigkeit jedes Rads, einem Fahrzeuggierwinkel und Betriebsbedingungen des Getriebes ausgewählt sind,
und dadurch, dass die elektronische Steuereinheit (E) konfiguriert ist, um den Wertebereich der Betriebsparameter des Fahrzeugs und/oder Kombinationen des Wertebereichs zu definieren, die eine Sicherheitsvorrangbedingung bestimmen,
die elektronische Steuereinheit (E) auch konfiguriert ist, um die korrigierenden Funktionen zu deaktivieren, wenn eine Sicherheitsvorrangbedingung detektiert wird.

3. Kraftfahrzeug nach Anspruch 1, **dadurch gekennzeichnet, dass** die elektronische Steuereinheit konfiguriert ist zum:
- Berechnen eines Parameters (Ri), der einen Lärmpegel angibt, wenn während eines Bremsens ein Lärm aufgrund einer oxidierten Bremsscheibe detektiert wird,
- Vergleichen des berechneten Wertes dieses Parameters (Ri) mit einem vorbestimmten Schwellenwert (Ro), und
- Aktivieren der korrigierenden Funktion, solange der berechnete Wert dieses Parameters (Ri) oberhalb des Schwellenwerts (Ro) ist,
und zum:
- Berechnen eines Parameters (Si), der einen Pfeiflärmpegel angibt, wenn während eines Bremsens (F1-F4) ein Scheibenbremsen pfeifen detektiert wird,
- Vergleichen des berechneten Wertes dieses Parameters (Si) mit einem vorbestimmten Schwellenwert (So), und
- Aktivieren der korrigierenden Funktion, solange der berechnete Wert dieses Parameters (Si) oberhalb des Schwellenwerts (So) ist,
und zum:
- Berechnen eines Parameters (Oi), der einen Grad der Verformung der Bremsscheibe (D) angibt, wenn während eines Bremsens ein Lärm aufgrund einer verformten Bremsscheibe detektiert wird,
- Vergleichen des berechneten Wertes dieses Parameters (Oi) mit einem vorbestimmten Schwellenwert (Oo), und
- Aktivieren der korrigierenden Funktion, solange der berechnete Wert dieses Parameters (Oi) oberhalb des Schwellenwerts (Oo) ist.

4. Kraftfahrzeug nach Anspruch 1, wobei die Bremssättel hydraulisch betätigt werden, **dadurch gekennzeichnet, dass** die elektronische Steuereinheit (E) konfiguriert ist, um das Bremssystem (1) auf eine solche Weise zu steuern, dass sie die Druckmodulation auf den Druck anwenden, mit dem mit Druck beaufschlagtes Fluid den Bremssätteln (C) der Scheibenbremsen (F1-F4) zugeführt wird.

5. Kraftfahrzeug nach Anspruch 1, wobei das Kraftfahrzeug Trommelbremsen umfasst, **dadurch gekennzeichnet, dass** mindestens ein Sensor für das von der Trommelbremse erzeugten Lärm mit jeder Trommelbremse assoziiert ist und
die elektronische Steuereinheit (E) konfiguriert ist, um das Ausgabesignal des der Trommelbremse assoziierten Sensors zu verarbeiten und zwischen dem durch eine oxidierte Trommel erzeugten Lärm und einem durch eine fehlerhafte Interaktion zwischen der Trommel und einer entsprechenden Bremsbacke erzeugten Pfeifen zu unterscheiden, wobei die elektronische Steuereinheit (E) auch konfiguriert ist, um das Bremssystem (1) derart zu steuern, dass dem Betriebsdruck der Bremsbacke eine Druckmodulation überlagert wird.

6. Steuerverfahren eines Bremssystems eines Kraftfahrzeugs, um das von den mit den Rädern (R1, R2) des Kraftfahrzeugs assoziierten Scheibenbremsen (F1, F2, F3, F4) erzeugten Lärm zu reduzieren oder zu eliminieren, während das Kraftfahrzeug läuft,
wobei das Verfahren die folgenden Schritte einschließt:
- Assoziieren von mindestens einem Sensor (S1, S2, S3) mit jeder Scheibenbremse (F1-F4), der konfiguriert ist, um ein Signal, das das von der Scheibenbremse erzeugten Lärm anzeigt, an eine elektronische Steuereinheit (E) des Bremssystems (1) zu senden,
- Verarbeiten, durch die elektronische Steuereinheit (E), der Ausgabesignale von den Sensoren, die den Scheibenbremsen des Kraftfahrzeugs assoziiert sind, auf eine solche Weise, dass zwischen Folgendem unterschieden wird:
- einem Mehrfrequenzlärm in einem Frequenzbereich von 200-1500 Hz, wobei dieser Lärm eine oxidierte Bremsscheibe angibt,
- einem Lärm in einem Frequenzbereich von 1500-14000 Hz, wobei dieser Lärm ein Pfeifen angibt, das durch eine fehlerhafte Interaktion zwischen einem Bremsbelag (BP1, BP2) und der entsprechenden Bremsscheibe (D) erzeugt wird, und
- einem periodischen Lärm, das eine Periode aufweist, die als eine Funktion von der Geschwindigkeit des Fahrzeugs variabel ist, wobei dieser Lärm eine verformte Bremsscheibe angibt,
wobei das Verfahren auch die folgenden korrigierenden Funktionen einschließt:
- Steuern des Bremssystems (1) über die elektronische Steuereinheit (E), wenn während eines Bremsens ein Lärm aufgrund einer oxidierten Bremsscheibe detektiert wird, auf eine solche Weise, dass dem Druck, mit dem die Bremsbeläge gegen die Bremsscheibe gedrückt werden, eine Druckmodulation überlagert wird,
wobei die Druckmodulation derart ist, dass sie eine teilweise oder vollständige Entfernung einer Oxidschicht von der Bremsscheibe verursacht, während gleichzeitig die anderen Bremsen des Fahrzeugs betätigt werden, um ihre Bremsleistungsfähigkeit nicht zu verändern,
- Steuern des Bremssystems, durch die elektronische Steuereinheit (E), wenn während eines Bremsens ein von einer Scheibenbremse erzeugtes Pfeifen detektiert wird, auf eine solche Weise, dass dem Druck, mit dem die Bremsbeläge gegen die Bremsscheibe gedrückt werden, eine Druckmodulation überlagert wird,
wobei die Druckmodulation derart ist, dass sie die Interaktion zwischen der Bremsscheibe (D) und den Bremsbelägen (BP1, BP2) der Scheibenbremse verändert, während gleichzeitig die anderen Bremsen des Fahrzeugs betätigt werden, um deren Bremsleistungsfähigkeit nicht zu verändern,
- Steuern des Bremssystems (1), durch die elektronische Steuereinheit (E), wenn während eines Bremsens ein periodischer Lärm detektiert wird, das mit der Geschwindigkeit des Fahrzeugs variiert, wobei der Lärm eine verformte Bremsscheibe angibt, auf eine solche Weise, dass die Druckbremsung auf diese Scheibe moduliert wird,
derart, dass das Auftreten von Vibrationen reduziert wird, die das Kraftfahrzeug beeinträchtigen können, wobei gleichzeitig die anderen Bremsen des Fahrzeugs betätigt werden, um deren Bremsleistungsfähigkeit nicht zu verändern.

7. Verfahren nach Anspruch 6, **dadurch gekennzeichnet, dass** es Empfangen, in der elektronischen Steuereinheit (E), von einer Vielzahl von Sensoren des Kraftfahrzeugs, von Signalen umfasst, die einen oder mehrere Betriebsparameter des Kraftfahrzeugs angeben, die zum Beispiel aus einem Lenkwinkel, einer Fahrzeuggeschwindigkeit, einer Drehgeschwindigkeit jedes Rads, einem Fahrzeuggierwinkel und Betriebsbedingungen des Getriebes ausgewählt werden,
und dadurch, dass durch die elektronische Steuereinheit (E) Wertebereiche der Betriebsparameter des Fahrzeugs und/oder Kombinationen der Wertebereiche definiert werden, die eine Sicherheitsvorrangbedingung bestimmen,
das Verfahren den Vorgang der Deaktivierung der korrigierenden Funktionen umfasst, wenn eine Sicherheitsvorrangbedingung detektiert wird.

8. Verfahren nach Anspruch 6, **dadurch gekennzeichnet, dass** es Folgendes umfasst:
- Berechnen, durch die elektronische Steuereinheit (E), wenn während eines Bremsens ein Lärm aufgrund einer oxidierten Bremsscheibe detektiert wird, eines Parameters (Ri), der einen Lärmpegel angibt,
- Vergleichen, durch die elektronische Steuereinheit (E), des berechneten Wertes dieses Parameters (Ri) mit einem vorbestimmten Schwellenwert (Ro), und
- Aktivieren, durch die elektronische Steuereinheit (E), der korrigierenden Funktion, solange der berechnete Wert dieses Parameters (Ri) oberhalb des Schwellenwerts (Ro) ist,
wobei das Verfahren auch Folgendes umfasst:
- Berechnen, durch die elektronische Steuereinheit (E), wenn während des Bremsens ein Pfeifen in einer Scheibenbremse detektiert wird, eines Parameters (Si), der den akustischen Pegel des Pfeifens angibt,
- Vergleichen, durch die elektronische Steuereinheit (E), des berechneten Wertes dieses Parameters (Si) mit einem vorbestimmten Schwellenwert (So), und
- Aktivieren, durch die elektronische Steuereinheit (E), der korrigierenden Funktion, solange der berechnete Wert dieses Parameters (Si) oberhalb des Schwellenwerts (So) ist,
und das Verfahren auch Folgendes umfasst:
- Berechnen, wenn ein Lärm aufgrund einer verformten Bremsscheibe während eines Bremsens detektiert wird, eines Parameters (Oi), der den Grad der Verformung der Scheibe (D) angibt,
- Vergleichen, durch die elektronische Steuereinheit (E), des berechneten Wertes dieses Parameters (Oi) mit einem vorbestimmten Schwellenwert (Oo), und
- Aktivieren, durch die elektronische Steuereinheit (E), der korrigierenden Funktion, solange der berechnete Wert dieses Parameters (Oi) oberhalb des Schwellenwerts (Oo) ist.

9. Verfahren nach Anspruch 6, wobei das Kraftfahrzeug Trommelbremsen umfasst, **dadurch gekennzeichnet, dass** mit jeder Trommelbremse mindestens ein Sensor für das von der Trommelbremse erzeugten Lärm assoziiert ist und die elektronische Steuereinheit (E) konfiguriert ist, um
Ausgabesignale von dem mit der Trommelbremse assoziierten Sensor zu verarbeiten und zwischen dem durch eine oxidierte Trommel erzeugten Lärm und einem durch eine fehlerhafte Interaktion zwischen der Trommel und einer entsprechenden Bremsbacke erzeugten Pfeifen zu unterscheiden, wobei die elektronische Steuereinheit (E) auch konfiguriert ist, um das Bremssystem (1) auf eine solche Weise zu steuern, dass dem Betriebsdruck der Bremsbacke eine Druckmodulation überlagert wird.

## Revendications

1. Véhicule à moteur, comprenant :
- une pluralité de freins à disque (F1, F2, F3, F4) associés aux roues (R1, R2) du véhicule à moteur,
- chaque frein à disque comprenant un disque (D) relié en rotation à la roue respective, et un étrier de frein (C) pourvu de plaquettes de frein (BP1, BP2) coopérant avec le disque (D),
- un système de freinage (1) pour commander le fonctionnement desdits freins à disque (F1-F4) à la suite de l'intervention du conducteur sur la pédale de frein (2) ou à la suite de l'intervention d'un système de freinage automatique dont est pourvu le véhicule à moteur, et
- un dispositif de commande électronique (E) dudit système de freinage (1),
- dans lequel à chaque frein à disque (F1-F4) est associé au moins un capteur (S1, S2, S3), qui est configuré pour envoyer un signal représentatif du bruit généré par le frein à disque audit dispositif de commande électronique (E),
ledit véhicule à moteur étant **caractérisé en ce que** ledit dispositif de commande électronique (E) est configuré pour traiter les signaux de sortie provenant des capteurs (S1, S2, S3) associés aux freins à disque (F1-F4) du véhicule à moteur, de manière à distinguer entre :
- un bruit multifréquence dans une plage de fréquences de 200 à 1500 Hz, ce bruit étant indicatif d'un disque de frein oxydé,
- un bruit dans une plage de fréquences de 1500 à 14000 Hz, ce bruit étant indicatif d'un sifflement généré par une interaction incorrecte entre une plaquette de frein (BP1, BP2) et le disque de frein (D) respectif, et
- un bruit périodique ayant une période variable en fonction de la vitesse du véhicule, ce bruit étant indicatif d'un disque de frein déformé,
ledit dispositif de commande électronique (E) étant également configuré pour mettre en œuvre les fonctions correctives suivantes :
- la commande dudit système de freinage (1), lorsque, pendant le freinage, un bruit dû à un disque de frein oxydé est détecté, de manière à superposer une modulation de pression à la pression avec laquelle les plaquettes de frein (BP1, BP2) sont pressées contre le disque de frein (D), ladite modulation de pression étant telle qu'elle provoque l'élimination partielle ou totale d'une couche d'oxyde de ce disque de frein (D), tout en actionnant simultanément les autres freins du véhicule afin de ne pas altérer leur performance de freinage,
- la commande dudit système de freinage (1), lorsque, pendant le freinage, un sifflement généré par un frein à disque (F1-F4) est détecté, de manière à superposer une modulation de pression à la pression avec laquelle les plaquettes de frein (BP1, BP2) sont pressées contre le disque de frein (D), ladite modulation de pression étant telle qu'elle modifie l'interaction entre le disque de frein et les plaquettes de frein du frein à disque, tout en actionnant simultanément les autres freins du véhicule afin de ne pas altérer leur performance de freinage,
- la commande dudit système de freinage lorsque, pendant le freinage, un bruit périodique est détecté qui est variable en fonction de la vitesse du véhicule, ce bruit étant indicatif d'un disque de frein déformé, de manière à moduler la pression de freinage sur ce disque, afin de réduire l'apparition de vibrations qui peuvent affecter le véhicule à moteur, tout en actionnant simultanément les autres freins du véhicule afin de ne pas altérer leur performance de freinage.

2. Véhicule à moteur selon la revendication 1, **caractérisé en ce que** ledit dispositif de commande électronique (E) est configuré pour recevoir des signaux d'une pluralité de capteurs de véhicule à moteur indiquant un ou plusieurs paramètres de fonctionnement du véhicule à moteur, sélectionnés, par exemple, parmi l'angle de braquage, la vitesse du véhicule, la vitesse de rotation de chaque roue, l'angle de lacet du véhicule, les conditions de fonctionnement de la transmission, et **en ce que** ledit dispositif de commande électronique (E) est configuré pour définir la plage de valeurs desdits paramètres de fonctionnement du véhicule et/ou des combinaisons de ladite plage de valeurs qui déterminent une condition de priorité de sécurité,
ledit dispositif de commande électronique (E) étant également configuré pour désactiver lesdites fonctions correctives lorsqu'une condition de sécurité prioritaire est détectée.

3. Véhicule à moteur selon la revendication 1, **caractérisé en ce que** ledit dispositif de commande électronique est configuré pour :
- calculer un paramètre (Ri) représentatif d'un niveau de bruit lorsque, pendant le freinage, un bruit dû à un disque de frein oxydé est détecté,
- comparer la valeur calculée de ce paramètre (Ri) à une valeur seuil prédéterminée (Ro), et
- activer ladite fonction corrective tant que la valeur calculée de ce paramètre (Ri) est supérieure à ladite valeur seuil (Ro),
et pour :
- calculer un paramètre (Si) représentatif d'un niveau de bruit de sifflement lorsqu'un sifflement de frein à disque est détecté pendant le freinage (F1-F4),
- comparer la valeur calculée de ce paramètre (Si) à une valeur seuil prédéterminée (So), et
- activer ladite fonction corrective tant que la valeur calculée de ce paramètre (Si) est supérieure à ladite valeur seuil (So),
et pour :
- calculer un paramètre (Oi) représentatif d'un degré de déformation du disque de frein (D) lorsqu'un bruit dû à un disque de frein déformé est détecté pendant le freinage,
- comparer la valeur calculée de ce paramètre (Oi) à une valeur seuil prédéterminée (Oo), et
- activer ladite fonction corrective tant que la valeur calculée de ce paramètre (Oi) est supérieure à ladite valeur seuil (Oo).

4. Véhicule à moteur selon la revendication 1, dans lequel les étriers de frein sont actionnés hydrauliquement, **caractérisé en ce que** ledit dispositif de commande électronique (E) est configuré pour commander le système de freinage (1) de manière à appliquer ladite modulation de pression à la pression avec laquelle le fluide sous pression est fourni aux étriers de frein (C) des freins à disque (F1-F4).

5. Véhicule à moteur selon la revendication 1, dans lequel le véhicule à moteur comprend des freins à tambour, **caractérisé en ce qu'**au moins un capteur du bruit généré par le frein à tambour est associé à chaque frein à tambour et ledit dispositif de commande électronique (E) est configuré pour traiter le signal de sortie provenant du capteur associé au frein à tambour et pour distinguer entre le bruit généré par un tambour oxydé et un sifflement généré par une interaction incorrecte entre le tambour et un segment de frein respectif, ledit dispositif de commande électronique (E) étant également configuré pour commander ledit système de freinage (1) de manière à superposer une modulation de pression sur la pression de fonctionnement dudit segment de frein.

6. Procédé de commande d'un système de freinage d'un véhicule à moteur afin de réduire ou d'éliminer le bruit généré par des freins à disque (F1, F2, F3, F4) associés aux roues (R1, R2) du véhicule à moteur, pendant que le véhicule à moteur roule,
ledit procédé comprenant les étapes de :
- association à chaque frein à disque (F1-F4) d'au moins un capteur (S1, S2, S3) configuré pour envoyer un signal représentatif du bruit généré par le frein à disque à un dispositif de commande électronique (E) dudit système de freinage (1),
- traitement, par l'intermédiaire dudit dispositif de commande électronique (E), des signaux de sortie provenant des capteurs associés aux freins à disque du véhicule à moteur, de manière à distinguer entre :
- un bruit multifréquence dans une plage de fréquences de 200 à 1500 Hz, ce bruit étant indicatif d'un disque de frein oxydé,
- un bruit dans une plage de fréquences de 1500 à 14000 Hz, ce bruit étant indicatif d'un sifflement généré par une interaction incorrecte entre une plaquette de frein (BP1, BP2) et le disque de frein (D) respectif, et
- un bruit périodique ayant une période variable en fonction de la vitesse du véhicule, ce bruit étant indicatif d'un disque de frein déformé,
ledit procédé comprenant également les fonctions correctives suivantes :
- la commande dudit système de freinage (1), par l'intermédiaire dudit dispositif de commande électronique (E), lorsque, pendant le freinage, un bruit dû à un disque de frein oxydé est détecté, de manière à superposer une modulation de pression à la pression avec laquelle les plaquettes de frein sont pressées contre le disque de frein, la modulation de pression étant telle qu'elle provoque une élimination partielle ou totale d'une couche d'oxyde du disque de frein, tout en actionnant simultanément les autres freins du véhicule afin de ne pas altérer leur performance de freinage,
- la commande du système de freinage, par l'intermédiaire dudit dispositif de commande électronique (E), lorsque, pendant le freinage, un sifflement généré par un frein à disque est détecté, de manière à superposer une modulation de pression à la pression avec laquelle les plaquettes de frein sont pressées contre le disque de frein, la modulation de pression étant telle qu'elle modifie l'interaction entre le disque de frein (D) et les plaquettes de frein (BP1, BP2) du frein à disque, tout en actionnant simultanément les autres freins du véhicule afin de ne pas altérer leur performance de freinage,
- la commande du système de freinage (1), par l'intermédiaire dudit dispositif de commande électronique (E), lorsque, pendant le freinage, un bruit périodique variant avec la vitesse du véhicule est détecté, ce bruit étant indicatif d'un disque de frein déformé, de manière à moduler la pression de freinage sur ce disque, afin de réduire l'apparition de vibrations qui peuvent affecter le véhicule à moteur, tout en actionnant simultanément les autres freins du véhicule afin de ne pas altérer leur performance de freinage.

7. Procédé selon la revendication 6, **caractérisé en ce qu'**il comprend la réception, dans ledit dispositif de commande électronique (E), en provenance d'une pluralité de capteurs du véhicule à moteur, de signaux représentatifs d'un ou de plusieurs paramètres de fonctionnement du véhicule à moteur, sélectionnés, par exemple, parmi l'angle de braquage, la vitesse du véhicule, la vitesse de rotation de chaque roue, l'angle de lacet du véhicule, les conditions de fonctionnement de la transmission, et **en ce que**, par l'intermédiaire du dispositif de commande électronique (E), des plages de valeurs desdits paramètres de fonctionnement du véhicule et/ou des combinaisons desdites plages de valeurs sont définies qui déterminent une condition de sécurité prioritaire,
ledit procédé comprenant l'opération de désactivation desdites fonctions correctives lorsqu'une condition de sécurité prioritaire est détectée.

8. Procédé selon la revendication 6, **caractérisé en ce qu'**il comprend :
- le calcul, par l'intermédiaire dudit dispositif de commande électronique (E), lorsque, pendant le freinage, un bruit dû à un disque de frein oxydé est détecté, d'un paramètre (Ri) représentatif d'un niveau de bruit,
- la comparaison, par l'intermédiaire dudit dispositif de commande électronique (E), de la valeur calculée de ce paramètre (Ri) avec une valeur seuil prédéterminée (Ro), et
- l'activation, par l'intermédiaire dudit dispositif de commande électronique (E), de ladite fonction corrective tant que la valeur calculée de ce paramètre (Ri) est supérieure à ladite valeur seuil (Ro),
le procédé comprenant également :
- le calcul, par l'intermédiaire dudit dispositif de commande électronique (E), lorsque, pendant le freinage, un sifflement est détecté dans un frein à disque, d'un paramètre (Si) représentatif du niveau acoustique du sifflement,
- la comparaison, par l'intermédiaire dudit dispositif de commande électronique (E), de la valeur calculée de ce paramètre (Si) avec une valeur seuil prédéterminée (So), et
- l'activation, par l'intermédiaire dudit dispositif de commande électronique (E), de ladite fonction corrective tant que la valeur calculée de ce paramètre (Si) est supérieure à ladite valeur seuil (So),
et le procédé comprenant également :
- le calcul, lorsqu'un bruit dû à un disque de frein déformé est détecté pendant le freinage, d'un paramètre (Oi) représentatif du degré de déformation du disque (D),
- la comparaison, par l'intermédiaire dudit dispositif de commande électronique (E), de la valeur calculée de ce paramètre (Oi) avec une valeur seuil prédéterminée (Oo), et
- l'activation, par l'intermédiaire dudit dispositif de commande électronique (E), de ladite fonction corrective tant que la valeur calculée de ce paramètre (Oi) est supérieure à ladite valeur seuil (Oo).

9. Procédé selon la revendication 6, dans lequel le véhicule à moteur comprend des freins à tambour, **caractérisé en ce qu'**au moins un capteur du bruit généré par le frein à tambour est associé à chaque frein à tambour et ledit dispositif de commande électronique (E) est configuré pour traiter les signaux de sortie provenant du capteur associé au frein à tambour et pour distinguer entre le bruit généré par un tambour oxydé et un sifflement généré par une interaction incorrecte entre le tambour et un segment de frein respectif, ledit dispositif de commande électronique (E) étant également configuré pour commander ledit système de freinage (1) de manière à superposer une modulation de pression sur la pression de fonctionnement dudit segment de frein.
